# EUROPÄISCHE PATENTANMELDUNG

(11) **EP 4 650 191 A1**
(43) Veröffentlichungstag der Anmeldung: **19.11.2025**
(21) Anmeldenummer: 25170253.6
(22) Anmeldetag: 14.04.2025
(51) Int. Cl.: B60C 11/12, B60C 11/03

(54) **FAHRZEUGREIFEN**

(30) Priorität: 15.05.2024 DE 102024204499
(71) Anmelder: Continental Reifen Deutschland GmbH, 30175 Hannover (DE)
(72) Erfinder: Rittweger, Stefan, 30175 Hannover (DE); Brockmann, Jürgen, 30175 Hannover (DE); Heinhaupt, Torsten, 30175 Hannover (DE); Bauer, Claudia, 30175 Hannover (DE); Brandau, Christian, 30175 Hannover (DE); Herbst, Stephan, 30175 Hannover (DE)
(74) Vertreter: Continental Corporation

(57) **Zusammenfassung**

Die Erfindung betrifft einen Fahrzeugreifen mit einem Laufstreifen mit V-förmig zueinander verlaufenden Schrägrillen (1, 2), wobei zwischen Schrägrillen (1, 2) weitere Rillen (3a, 3b) verlaufen, wobei die Schrägrillen (1, 2) und die weiteren Rillen (3a, 3b) dem Laufstreifen schulterseitige Profilblöcke (4) und halbmittige Profilblöcke (5) verleihen.

Die Einschnitte (7) in den halbmittigen Profilblöcken (5) verlaufen bezüglich der Umfangsrichtung gleichsinnig geneigt zu den Blockkanten (5a, 5b),
wobei sämtliche Einschnitte (7) in die an den zugehörigen Profilblock (4, 5) angrenzende(n) weitere(n) Rille(n) (3a, 3b) einmünden,
wobei die Mikroeinschnitte (9₂, 9₃, 9₅) in den halbmittigen Profilblöcken (5) bezüglich der Umfangsrichtung gegensinnig zum bzw. zu den Einschnitt(en) (7) geneigt verlaufen, je zumindest einen Einschnitt (7) kreuzen und wobei der Winkel (δ), unter welchem die Mikroeinschnitte (9₂, 9₃, 9₅) in den halbmittigen Profilblöcken (5) verlaufen, größer ist als der Winkel (γ, ε), unter welchem die Mikroeinschnitte (9, 9₁, 9₄) in den schulterseitigen Profilblöcken (4) verlaufen.

## Beschreibung

Die Erfindung betrifft einen Fahrzeugreifen mit einem laufrichtungsgebunden ausgeführten Laufstreifen mit über seine Breite V-förmig zueinander verlaufenden, auf Profiltiefe reichenden Schrägrillen, wobei in jeder Laufstreifenhälfte zwischen in Umfangsrichtung aufeinanderfolgenden Schrägrillen jeweils weitere Rillen verlaufen, wobei die Schrägrillen und die weiteren Rillen dem Laufstreifen in jeder Laufstreifenhälfte schulterseitige Profilblöcke und zu diesen benachbarte, halbmittige Profilblöcke verleihen,
wobei die schulterseitigen und halbmittigen Profilblöcke an den Schrägrillen je eine einlaufende und eine auslaufende Blockkante aufweisen und jeweils von zumindest einem oder mehreren in Draufsicht parallel zueinander verlaufenden Einschnitt(en) mit einer Breite von 0,40 mm bis 2,00 mm sowie einer maximalen Tiefe von 50% bis 100% der Profiltiefe durchquert sind, wobei die Einschnitte in den schulterseitigen Profilblöcken bezüglich der Umfangsrichtung gleichsinnig geneigt zu den Blockkanten verlaufen,
wobei die schulterseitigen Profilblöcke jeweils mit in Draufsicht parallel zueinander, bezüglich der Umfangsrichtung gegensinnig zu dem bzw. zu den Einschnitt(en) geneigt sowie unter einem Winkel verlaufenden, je zumindest einen Einschnitt kreuzenden Mikroeinschnitten und die halbmittigen Profilblöcke jeweils mit in Draufsicht parallel zueinander, bezüglich der Umfangsrichtung unter einem Winkel verlaufenden Mikroeinschnitten versehen sind,
wobei die Mikroeinschnitte eine Breite und eine Tiefe von 0,40 mm bis 2,00 mm aufweisen.

Ein derartiger Fahrzeugreifen ist beispielsweise aus der DE 10 2017 211 129 A1 bekannt. Der Fahrzeugreifen weist einen laufrichtungsgebunden ausgeführten Laufstreifen mit über seine Breite V-förmig zueinander verlaufenden Schrägrillen, zwischen diesen verlaufenden weiteren Rillen, schulterseitigen Profilblöcken und zu diesen benachbart liegenden, halbmittigen Profilblöcken auf. Die schulterseitigen und halbmittigen Profilblöcke sind jeweils von mehreren in Draufsicht parallel zueinander verlaufenden Einschnitten mit einer Breite von 0,40 mm bis 0,80 mm und einer maximalen Tiefe von mindestens 50% der Profiltiefe durchquert, wobei die Einschnitte in den schulterseitigen Profilblöcken bezüglich der Umfangsrichtung gleichsinnig und die Einschnitte in den halbmittigen Profilblöcken bezüglich der Umfangsrichtung gegensinnig zu den an den Schrägrillen liegenden Blockkanten geneigt verlaufen. Ferner sind die schulterseitigen Profilblöcke mit in Draufsicht parallel zueinander, bezüglich der Umfangsrichtung gegensinnig zum bzw. zu den Einschnitt(en) geneigt verlaufenden, sämtliche Einschnitte kreuzenden, in die Schrägrillen einmündenden Mikroeinschnitten mit einer Breite und einer Tiefe von 0,20 mm bis 0,50 mm versehen. Die halbmittigen Profilblöcke sind mit parallel zu den Einschnitten verlaufenden Mikroeinschnitten versehen. Der Reifen soll eine gute Winterperformance aufweisen, wobei die Mikroeinschnitte für eine gute Ableitung des sich bildenden Schmelzwasserfilms beim Fahren auf Eis und Schnee sorgen sollen.

Bei dem aus der DE 10 2017 211 129 A1 bekannten Fahrzeugreifen besteht eine erhöhte Wahrscheinlichkeit des Auftretens eines ungleichmäßigen Abriebbilds im Bereich der halbmittigen Profilblöcke, was insbesondere auf die Form und dem damit verbundenen Deformationsverhalten der durch die Einschnitte gebildeten Profilblocksegmente zurückzuführen ist. In der Folge tritt eine Verkleinerung der Nettokontaktfläche des Laufstreifens zum Untergrund auf, sodass die Kraftübertragung zum Untergrund verringert und die Trockenperformance über den Laufstreifenabrieb noch nicht optimal ist.

Der Erfindung liegt daher die Aufgabe zugrunde, bei einem Fahrzeugreifen der eingangs genannten Art die Trockenperformance über den Laufstreifenabrieb auf einem höheren Niveau als bisher zu halten, wobei die Mikroeinschnitte bei neuem bzw. wenig abgefahrenem Reifen weiterhin für eine gute Ableitung des sich bildenden Schmelzwasserfilms sorgen sollen.

Gelöst wird die gestellte Aufgabe erfindungsgemäß dadurch,
dass die Einschnitte in den halbmittigen Profilblöcken bezüglich der Umfangsrichtung gleichsinnig geneigt zu den Blockkanten verlaufen,
wobei sämtliche Einschnitte in den schulterseitigen und halbmittigen Profilblöcken in die an den zugehörigen Profilblock angrenzende(n) weitere(n) Rille(n) einmünden,
wobei die Mikroeinschnitte in den halbmittigen Profilblöcken bezüglich der Umfangsrichtung gegensinnig zum bzw. zu den Einschnitt(en) geneigt verlaufen, je zumindest einen Einschnitt kreuzen und wobei der Winkel, unter welchem die Mikroeinschnitte in den halbmittigen Profilblöcken verlaufen, größer ist als der Winkel, unter welchem die Mikroeinschnitte in den schulterseitigen Profilblöcken verlaufen.

Die halbmittigen Profilblöcke weisen bedingt durch die Neigung der in ihnen befindlichen Einschnitte - verglichen mit den halbmittigen Profilblöcken aus der DE 10 2017 211 129 A1 - eine höhere und gleichmäßigere Steifigkeit über den Laufstreifenabrieb auf, sodass diese folglich gleichmäßiger Abreiben, wodurch eine größere Kontaktfläche zum Untergrund erhalten bleibt und die Trockenperformance auf einem höheren Niveau gehalten wird. Die spezielle Winkelung der Mikroeinschnitte sorgt in den halbmittigen Profilblöcken für besonders kurze Wasserdrainagewege, wodurch weiterhin eine gute Ableitung des sich bildenden Schmelzwasserfilms sichergestellt ist.

Gemäß einer bevorzugten Ausführung ist der Winkel, unter welchem die Mikroeinschnitte in den halbmittigen Profilblöcken verlaufen, um zumindest 15°, insbesondere um zumindest 20°, bevorzugt um zumindest 25°, besonders bevorzugt um 27° bis 33°, größer als der Winkel, unter welchem die Mikroeinschnitte in den schulterseitigen Profilblöcken verlaufen. Diese Maßnahme verbessert die Effizient der durch die Mikroeinschnitte in den halbmittigen Profilblöcken gebildeten Wasserdrainagewege.

Vorteilhaft ist es ferner, wenn der Winkel, unter welchem die Mikroeinschnitte in den halbmittigen Profilblöcke verlaufen, 50° bis 70°, insbesondere 55° bis 65°, bevorzugt 57° bis 63° beträgt. Dies trägt zur Bildung kurzer Wasserdrainagewege bei, wobei durch das von den Einschnitten und Mikroeinschnitten gebildete Einschnittmuster keine bzw. kaum spitzwinkelige, oberflächliche Profilblockbereiche gebildet werden, wodurch der Profilblockabrieb auf eine für die Trockenperformance vorteilhafte Weise zusätzlich vergleichmäßigt ist.

Gemäß einer weiteren bevorzugten Ausführung gehören zu den Mikroeinschnitten in den schulterseitigen Profilblöcken jeweils Mikroeinschnitte einer ersten Art, welche jeweils den bzw. sämtliche im schulterseitigen Profilblock befindlichen Einschnitt(e) kreuzen, eine ihrem Verlauf folgende Einschnittmittellinie und eine zwischen den Enden der Einschnittmittellinie gerade verlaufende Einschnittbasislinie aufweisen und welche in einem in geradliniger Verlängerung der Einschnittbasislinie ermittelten Abstand von insbesondere 0,50 mm bis 2,50 mm, vorzugsweise von 1,00 mm bis 2,00 mm, vor der auslaufenden Blockkante enden. Die schulterseitigen Profilblöcke treten insbesondere bei einer vorübergehenden Verbreiterung der Bodenaufstandsfläche verstärkt mit dem Untergrund in Kontakt, wobei eine solche vor allem unter stärkerer Traktions- und Bremsbelastung auftritt. Die durch die Mikroeinschnitte nicht unterbrochene, auslaufende Blockkante ist vor allem für die Trockenperformance bei neuem bzw. wenig abgefahrenem Reifen günstig. Die Ableitung von Schmelzwasser steht im Bereich der schulterseitigen Profilblöcke somit tendenziell weniger im Focus.

Nachfolgend wird auf miteinander unabhängig kombinierbare, vorteilhafte Weiterentwicklungen der letztgenannten bevorzugten Ausführung eingegangen.

Eine erste vorteilhafte Weiterentwicklung sieht vor, dass zu den Mikroeinschnitten erster Art in den schulterseitigen Profilblöcken jeweils Mikroeinschnitte gehören, welche in einem in geradliniger Verlängerung der Einschnittbasislinie ermittelten Abstand von insbesondere 0,50 mm bis 2,50 mm, vorzugsweise von 1,00 mm bis 2,00 mm, vor der einlaufenden Blockkante enden, wobei diese Mikroeinschnitte erster Art vorzugsweise die einzigen Mikroeinschnitte ersten Art sind. Es ist somit auch die einlaufende Blockkante nicht von den Mikroeinschnitten unterbrochen, was sich zusätzlich vorteilhaft auf die Traktions- und Bremsperformance auswirkt.

Gemäß einer zweiten vorteilhaften Weiterentwicklung gehören zu den Mikroeinschnitten erster Art in den schulterseitigen Profilblöcken jeweils Mikroeinschnitte, welche, in Draufsicht betrachtet, durchgehend gebogen oder gerade verlaufen, wobei der Winkel, unter welchem die durchgehend gebogen oder gerade verlaufenden Mikroeinschnitte zur Umfangsrichtung verlaufen, insbesondere 20° bis 40°, bevorzugt 25° bis 35°, besonders bevorzugt 27° bis 33°, beträgt. Der gebogene Verlauf begünstigt die oberflächliche Entwässerung der schulterseitigen Profilblöcke bei der beim Fahren von Kurven auftretenden, temporären Verlagerung der Bodenaufstandsfläche und den damit einhergehenden Kräften.

Bei der zweiten vorteilhaften Weiterentwicklung ist es bevorzugt, wenn bei durchgehend gebogen verlaufenden Mikroeinschnitten die Biegung derart ist, dass sich die Einschnittbasislinie laufstreifeninnenseitig von der Einschnittmittellinie befindet.

Gemäß einer dritten vorteilhaften Weiterentwicklung gehören zu den Mikroeinschnitten erster Art in den schulterseitigen Profilblöcken jeweils Mikroeinschnitte, welche, in Draufsicht betrachtet, aus einem gerade sowie zur einlaufenden Blockkante verlaufenden, kurzen Mikroeinschnittabschnitt und einem gegenüber diesem länger ausgeführten sowie zur Umfangsrichtung weniger stark geneigten, gerade verlaufenden, langen Mikroeinschnittabschnitt zusammengesetzt sind, wobei der kurze Mikroeinschnittabschnitt in einem in Umfangsrichtung ermittelten Abstand vor dem zur einlaufenden Blockkante nächstliegenden Einschnitt endet und wobei der Winkel, unter welchem die Mikroeinschnitte aus den Mikroeinschnittabschnitten zur Umfangsrichtung verlaufen, insbesondere 15° bis 25° beträgt. Der zur Umfangsrichtung stärker geneigte, kurze Mikroeinschnittabschnitt stellt bei neuem bzw. wenig abgeriebenem Laufstreifen für die Traktions- und Bremsperformance günstige Griffkanten zur Verfügung.

Bei der dritten vorteilhaften Weiterentwicklung ist es bevorzugt, wenn die Mikroeinschnittabschnitte derart geneigt sind, dass sich die Einschnittbasislinie laufstreifenaußenseitig von der zugehörigen Einschnittmittellinie befindet.

Gemäß einer vierten vorteilhaften Weiterentwicklung gehört zu den Mikroeinschnitten in den schulterseitigen Profilblöcken jeweils ein einziger Mikroeinschnitt einer zweiten Art, welcher von sämtlichen Mikroeinschnitten innerhalb des jeweiligen schulterseitigen Profilblocks am weitesten laufstreifenaußenseitig ausgebildet ist und ausschließlich den zur auslaufenden Blockkante nächstliegenden Einschnitt kreuzt, eine zwischen den Enden der Einschnittmittellinie gerade verlaufende Einschnittbasislinie aufweist und welcher in einem in geradliniger Verlängerung der Einschnittbasislinie ermittelten Abstand von insbesondere 0,50 mm bis 2,50 mm, vorzugsweise von 1,00 mm bis 2,00 mm, vor der auslaufenden Blockkante endet.

Gemäß einer weiteren bevorzugten Ausführung gehören zu den Mikroeinschnitten in den halbmittigen Profilblöcken jeweils Mikroeinschnitte einer ersten Ausgestaltung, welche jeweils den bzw. sämtliche im halbmittigen Profilblock befindlichen Einschnitt(e) kreuzen und über die Blockkanten in die angrenzenden Schrägrillen einmünden. Sämtliche durch solche Mikroeinschnitte gebildete Wasserdrainagewege münden somit in einen Einschnitt bzw. eine Schrägrille und sind daher für die Ableitung des Schmelzwasserfilms von Vorteil.

Bei der letztgenannten bevorzugten Ausführung ist es günstig, wenn zu den Mikroeinschnitten in den halbmittigen Profilblöcken jeweils zwei Mikroeinschnitte einer zweiten Ausgestaltung gehören, wobei die Mikroeinschnitte der ersten Ausgestaltung im Bereich zwischen den zwei Mikroeinschnitten der zweiten Ausgestaltung verlaufen und wobei die Mikroeinschnitte der zweiten Ausgestaltung randseitige Mikroeinschnitte sind und jeweils zumindest einen, insbesondere genau einen, Einschnitt kreuzen, einseitig innerhalb des halbmittigen Profilblocks geschlossen enden und in eine der angrenzenden Schrägrillen einmünden. Solche Mikroeinschnitte stellen eine besonders vorteilhafte Ergänzung zu den Mikroeinschnitten der ersten Ausgestaltung dar.

Eine vorteilhafte Ausführung ist dadurch gegeben, dass, bezogen auf die Draufsicht, sich die Einschnitte jeweils aus einem trapezwellenförmig verlaufenden, mittigen Einschnittabschnitt sowie zwei gerade oder kaum merkbar gebogen verlaufenden, randseitigen Einschnittabschnitten zusammensetzen, wobei der mittige Einschnittabschnitt in Form von aneinander anschließenden, basisfreien, vorzugsweise gleichschenkeligen, Trapezen verläuft und aus gerade verlaufenden, gemeinsame Trapezschenkel bildenden Teilabschnitten und je eine kürzere Grundseite eines Trapezes bildenden Teilabschnitten zusammengesetzt ist.

Weitere Merkmale, Vorteile und Einzelheiten der Erfindung werden nun anhand der Zeichnung, die schematisch Ausführungsbeispiele der Erfindung zeigt, näher beschrieben. Dabei zeigen
Fig. 1 eine vereinfachte Draufsicht auf einen Umfangsabschnitt eines in die Ebene abgewickelten Laufstreifens eines Fahrzeugluftreifens mit einer ersten Ausführungsvariante der Erfindung,
Fig. 2 eine vergrößerte Draufsicht auf einen schulterseitigen Profilblock aus Fig. 1,
Fig. 2a eine weiter vergrößerte Draufsicht auf das Detail Z₂ₐ der Fig. 2,
Fig. 3 eine vergrößerte Draufsicht auf eine halbmittigen Profilblock aus Fig. 1,
Fig. 3a eine weiter vergrößerte Draufsicht auf das Detail Z₃ₐ der Fig. 3 und
Fig. 4 eine schematische Draufsicht auf einen schulterseitigen Profilblock mit einer zweiten Ausführungsvariante der Erfindung.

Gemäß der Erfindung ausgeführte Fahrzeugreifen sind Reifen für Kraftfahrzeuge, insbesondere für mehrspurige Kraftfahrzeuge, bevorzugt für Personenkraftwagen (PKWs), Vans (Transporter) oder SUVs, sowie vorzugsweise Fahrzeugluftreifen, besonders bevorzugt Fahrzeugluftreifen in Radialbauart, für Felgen mit einem ganzzahligen Felgendurchmesser von 13 Zoll bis 24 Zoll, insbesondere von 18 Zoll bis 23 Zoll, wobei die Fahrzeugreifen zum Fahren unter winterlichen Fahrbedingungen vorgesehen sind.

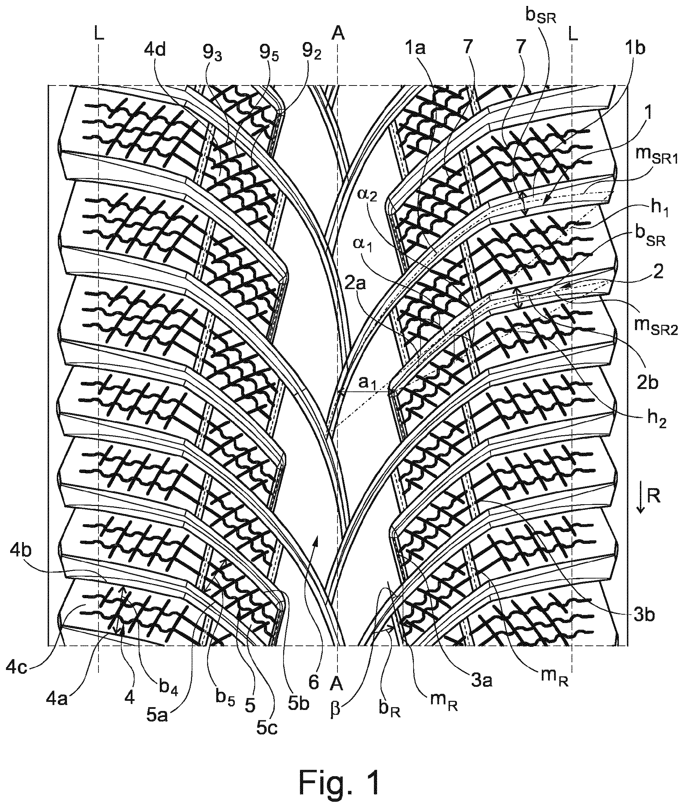

Fig. 1 zeigt eine vereinfachte Draufsicht auf einen in die Ebene abgewickelten Umfangsabschnitt eines Laufstreifens eines Fahrzeugluftreifens. Die Reifenäquatorialebene ist durch eine Linie A-A und die seitlichen Ränder der Bodenaufstandsfläche des Laufstreifens sind durch gestrichelte Linien L gekennzeichnet. Die Bodenaufstandsfläche entspricht dem statisch ermittelten Footprint gemäß E.T.R.T.O.-Standards (Last bei 70% der maximalen Tragfähigkeit bei einem Innendruck von 85% nach E.T.R.T.O.-Norm).

Der Laufstreifen weist eine laufrichtungsgebundene Profilierung auf und ist derart an einem Fahrzeug zu montieren, dass er die durch den Pfeil R angedeutete Abrollrichtung bei Vorwärtsfahrt aufweist.

Der Laufstreifen ist mit in Draufsicht über die Laufstreifenbreite V- förmig zueinander verlaufenden, die Haupt(entwässerungs)rillen des Laufstreifens bildenden Schrägrillen 1, 2 versehen, wobei die Abrollrichtung des Reifens bei Vorwärtsfahrt (Pfeil R) derart ist, dass die Schrägrillen 1, 2 zuerst mit ihren laufstreifeninnenseitigen Enden in die Bodenaufstandsfläche eintreten. In jeder Laufstreifenhälfte folgt in Umfangsrichtung abwechselnd eine Schrägrille 1 auf eine Schrägrille 2, wobei die zu dem einen Laufstreifenrand verlaufenden Schrägrillen 1 zu den zum anderen Laufstreifenrand verlaufenden Schrägrillen 1 in Umfangsrichtung versetzt sind, sodass folglich auch die zu dem einen Laufstreifenrand verlaufenden Schrägrillen 2 zu den zum anderen Laufstreifenrand verlaufenden Schrägrillen 2 in Umfangsrichtung versetzt sind. Die Schrägrillen 1 laufen über die Reifenäquatorialebene (Linie A-A) hinaus und münden jeweils in eine zum anderen seitlichen Laufstreifenrand verlaufende Schrägrille 1 ein. Die Schrägrillen 2 enden laufstreifeninnenseitig geschlossen in einem Abstand vor der Reifenäquatorialebene (Linie A-A). Die Schrägrillen 1 werden nachfolgend auch als "einmündende Schrägrillen 1" und die Schrägrillen 2 werden anschließend auch als "geschlossen endende Schrägrillen 2" bezeichnet.

Die Schrägrillen 1, 2 weisen jeweils eine in Draufsicht dem Rillenverlauf folgende Rillenmittellinie m_{SR1} (einmündende Schrägrille 1), m_{SR2} (geschlossen endende Schrägrille 2) auf, reichen in radialer Richtung auf die jeweils vorgesehene Profiltiefe von üblicherweise 6,5 mm bis 13,0 mm, weisen eine in Draufsicht senkrecht zur Rillenmittellinie m_{SR1}, m_{SR2} an der Laufstreifenperipherie gemessene, in Richtung Laufstreifenrand kontinuierlich zunehmende Breite b_{SR} von 3,0 mm bis 7,0 mm auf und verlaufen - bezogen auf eine die Enden der Rillenmittellinie m_{SR1}, m_{SR2} verbindende gerade Hilfslinie h₁ (Schrägrille 1), h₂ (Schrägrille 2) - zur Umfangsrichtung unter einem Winkel α₁ (Schrägrillen 1), α₂ (Schrägrillen 2), wobei der Winkel α₁ 40° bis 50° und der Winkel α₂ 55° bis 65° beträgt.

Die Schrägrillen 1, 2 setzen sich beim gezeigten Ausführungsbeispiel jeweils aus einem in Draufsicht durchgehend gebogen verlaufenden, laufstreifeninnenseitigen Rillenabschnitt 1a (Schrägrille 1), 2a (Schrägrille 2) und einem zur Umfangsrichtung gegenüber diesem stärker geneigten, schulterseitigen Rillenabschnitt 1b (Schrägrille 1), 2b (Schrägrille 2) zusammen.

Die laufstreifeninnenseitigen Rillenabschnitte 2a der geschlossen endenden Schrägrillen 2 enden laufstreifeninnenseitig - bezogen auf die Rillenmittellinien m_{SR} - in einem in axialer Richtung ermittelten Abstand a₁ von 5,0 mm bis 15,0 mm vor der Reifenäquatorialebene (Linie A-A).

In jeder Laufstreifenhälfte verlaufen zwischen den laufstreifeninnenseitigen Rillenabschnitten 1a, 2a von in Umfangsrichtung benachbarten Schrägrillen 1, 2 eine weiter laufstreifeninnenseitig ausgebildete Rille 3a und eine weiter laufstreifenaußenseitig ausgebildete Rille 3b, wobei die Rillen 3a, 3b jeweils eine Rillenmittellinie m_{R} aufweisen und, in Draufsicht betrachtet, gerade sowie - bezogen auf die Rillenmittellinie m_{R} - zur Umfangsrichtung unter einem Winkel β 5° bis 25° und bezüglich der Umfangsrichtung gegensinnig zu den laufstreifeninnenseitigen Rillenabschnitten 1a, 2a geneigt verlaufen. Die Rillen 3a, 3b weisen an der Laufstreifenperipherie eine in Draufsicht senkrecht zur Rillenmittellinie m_{R} ermittelte, insbesondere konstante Breite b_{R} von 2,0 mm bis 4,0 mm und in radialer Richtung eine konstante Tiefe von 40% bis 80% der Profiltiefe auf.

Der Laufstreifen weist durch die beschriebene Profilierung in jeder Laufstreifenhälfte schulterseitige Profilblöcke 4, zu diesen benachbarte halbmittige Profilblöcke 5 und von der Reifenäquatorialebene (Linie A-A) geschnittene, mittige Profilblöcke 6 auf. Die schulterseitigen Profilblöcke 4 erstrecken sich über den Bereich der schulterseitigen Rillenabschnitte 1b, 2b und sind laufstreifeninnenseitig von der jeweiligen Rille 3b begrenzt. Die halbmittigen Profilblöcke 5 sind seitlich von den Rillen 3a, 3b begrenzt und sind durch die laufstreifeninnenseitigen Rillenabschnitte 1a, 1b der Schrägrille 1, 2 voneinander getrennt. Die mittigen Profilblöcke 6 sind lediglich vereinfacht dargestellt.

Die weitere Ausgestaltung der schulterseitigen Profilblöcke 4 und der halbmittigen Profilblöcke 5 wird nachfolgend anhand einzelner Profilblöcke 4, 5 erläutert.

Der Profilblock 4, 5 weist, in Draufsicht betrachtet, eine entlang der angrenzenden Schrägrillen 1, 2 langgestreckte parallelogrammförmige Gestalt auf. Der Profilblock 4, 5 weist ferner an den jeweils angrenzenden Schrägrillen 1, 2 an der Laufstreifenperipherie liegende Blockkanten 4a, 4b (Profilblock 4), 5a, 5b (Profilblock 5) - nämlich eine beim Abrollen des Reifens bei Vorwärtsfahrt (Pfeil R) zuerst in den Untergrund eintretende, einlaufende Blockkante 4a, 5a und eine auslaufende Blockkante 4b, 5b - ferner eine in der Laufstreifenperipherie liegende Blockaußenfläche 4c, 5c und eine am Niveau der Blockaußenfläche 4c, 5c senkrecht zu und zwischen den Blockkanten 4a, 4b bzw. 5a, 5b ermittelte maximale Blockbreite b₄ (Profilblock 4), bs (Profilblock 5) auf, wobei die maximale Blockbreite b₄, bs die Breite an der breitesten Stelle ist. Bei gebogen verlaufenden Blockkanten 4a, 4b, 5a, 5b erfolgt die Ermittlung der maximalen Blockbreite b₄, bs senkrecht zwischen an die Blockkanten 4a, 4b, 5a, 5b angelegten, parallel zueinander verlaufenden Tangenten.

Jeder Profilblock 4, 5 ist mit zwei oder drei, von der Blockaußenfläche 4c, 5c ausgehenden Einschnitten 7 versehen, welche den jeweiligen Profilblock 4, 5 in seiner entlang der Schrägrillen 1, 2 vorliegenden Längserstreckung durchqueren, in die jeweils angrenzende(n) Rille(n) 3a, 3b einmünden, in Draufsicht betrachtet bezüglich der Umfangsrichtung gleichsinnig geneigt zu den zugehörigen Blockkanten 4a, 4b, 5a, 5b verlaufen und über die maximale Blockbreite b₄, bs insbesondere gleichmäßig verteilt angeordnet sind. Unter "durchquerenden Einschnitten 7" werden in schulterseitigen Profilblöcken 4 solche verstanden, welche den schulterseitigen Profilblock 4 zumindest innerhalb der Bodenaufstandsfläche durchqueren.

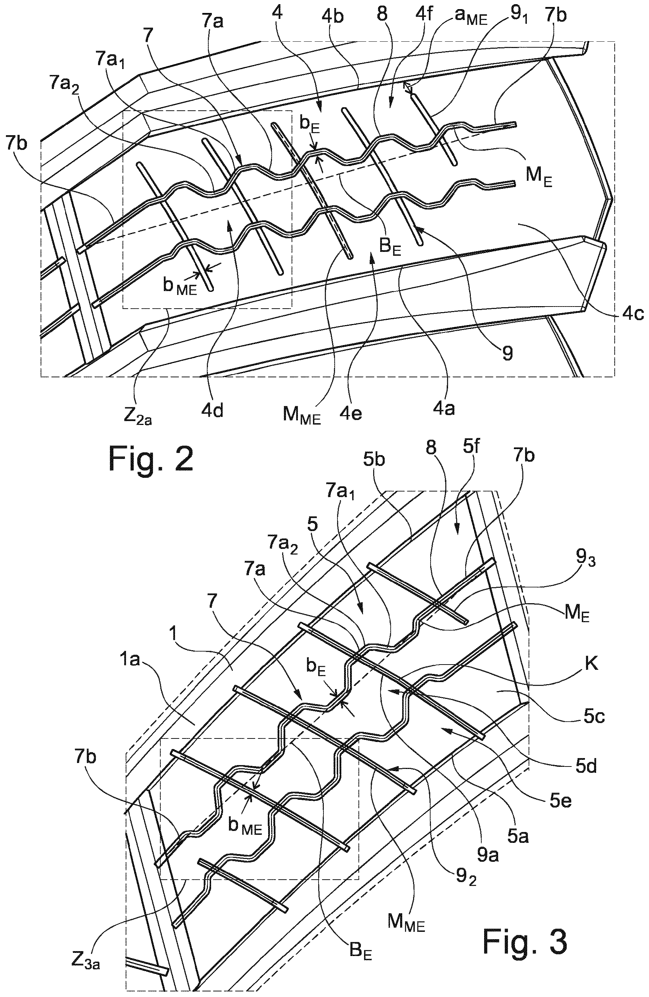

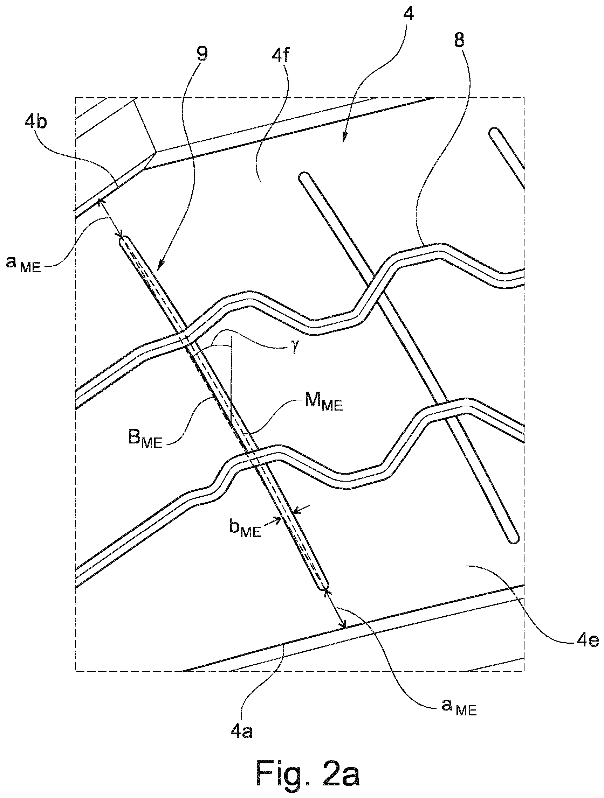

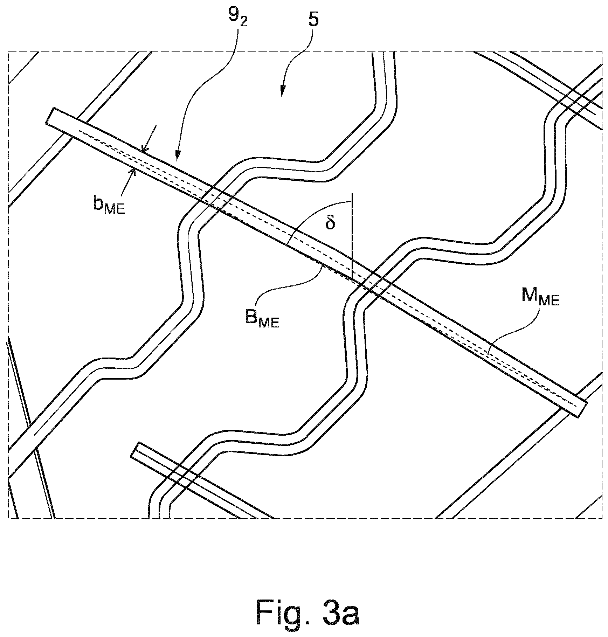

Gemäß Fig. 2 und Fig. 3 weisen die Einschnitte 7 an der Blockaußenfläche 4c, 5c liegende Einschnittkanten 8, eine am Niveau der Blockaußenfläche 4c, 5c liegende, in Draufsicht dem Einschnittverlauf folgende, übereinstimmend zu den Einschnittkanten 8 beabstandete Einschnittmittellinie M_{E}, eine senkrecht zur Einschnittmittellinie M_{E} zwischen den Einschnittkanten 8 ermittelte, konstante Breite b_{E} von 0,40 mm bis 2,00 mm, insbesondere von 0,60 mm bis 1,60 mm, und in radialer Richtung eine maximale Tiefe (Tiefe an der tiefsten Stelle) von 50% bis 100%, insbesondere von 60% bis 95%, der Profiltiefe auf und sind jeweils durch an die Einschnittkanten 8 anschließende, in radialer Richtung verlaufende Einschnittwände (nicht zu sehen) und einen Einschnittgrund (nicht bezeichnet) begrenzt. Die Einschnitte 7 weisen ferner jeweils eine in Draufsicht zwischen den Enden der Einschnittmittellinie M_{E} gerade verlaufende Einschnittbasislinie B_{E} auf, bezüglicher welcher die Einschnitte 7 die bereits erwähnte, relativ zur Umfangsrichtung vorliegende gleichsinnig Neigung zu den Blockkanten 4a, 4b, 5a, 5b aufweisen.

Die Einschnitte 7 gliedern den Profilblock 4, 5 - entsprechend der jeweiligen Anzahl von Einschnitten 7 - in ein zwischen zwei Einschnitten 7 liegendes, mittleres Blocksegment 4d (Profilblock 4), 5d (Profilblock 5) bzw. mehrere je zwischen zwei Einschnitten 7 liegende, mittlere Blocksegmente 4d, 5d, ein an einen einzigen Einschnitt 7 angrenzendes, die einlaufende Blockkante 4a, 5a mitumfassendes, einlaufendes, randseitiges Blocksegment 4e (Profilblock 4), 5e (Profilblock 5) und ein an einen einzigen Einschnitt 7 angrenzendes, die auslaufende Blockkante 4b, 5b mitumfassendes, auslaufendes, randseitiges Blocksegment 4f (Profilblock 4), 5f (Profilblock 5).

Die nachfolgenden Erläuterungen zu den Einschnitten 7 beziehen sich auf die Draufsicht.

Die Einschnitte 7 setzen sich beim Ausführungsbeispiel jeweils aus einem trapezwellenförmig verlaufenden, mittigen Einschnittabschnitt 7a sowie zwei gerade oder kaum merkbar gebogen verlaufenden, randseitigen Einschnittabschnitten 7b zusammen. Der mittige Einschnittabschnitt 7a verläuft in Form von aneinander anschließenden, basisfreien, vorzugsweise gleichschenkeligen Trapezen und ist aus gerade verlaufenden, gemeinsame Trapezschenkel, also Trapezschenkel von zwei Trapezen, bildenden Teilabschnitten 7a₁ und je eine kürzere Grundseite eines Trapezes bildenden Teilabschnitten 7a₂ zusammengesetzt.

Jeder Profilblock 4, 5 ist mit einer Anzahl von in Draufsicht parallel zueinander verlaufenden, jeweils zumindest einen Einschnitt 7 kreuzenden, daher durch diesen partiell unterbrochenen, Mikroeinschnitten 9, 9₁, 9₂, 9₃ versehen, welche, in Draufsicht betrachtet, jeweils gerade oder durchgehend gebogen (bogenförmig) verlaufen oder sich jeweils aus mehreren, insbesondere aus zwei, an einer Knickstelle K aneinander anschließenden gerade oder durchgehend gebogen verlaufenden Mikroeinschnittabschnitten 9a zusammensetzen.

Die Mikroeinschnitte 9, 9₁, 9₂, 9₃ verlaufen, in Draufsicht betrachtet, bezüglich der Umfangsrichtung gegensinnig geneigt zu den Einschnitten 7 und Blockkanten 4a, 4b, 5a, 5b, weisen jeweils eine am Niveau der Blockaußenfläche 4c, 5c liegende, in Draufsicht dem Einschnittverlauf mittig folgende Einschnittmittellinie M_{ME}, eine senkrecht zur Einschnittmittellinie M_{ME} ermittelte, konstante Breite b_{ME} von 0,40 mm bis 2,00 mm, insbesondere von bis zu 1,00 mm, in radialer Richtung eine maximale Tiefe (Tiefe an der tiefsten Stelle) von 0,40 mm bis 2,00 mm, insbesondere von 0,50 mm bis 1,00 mm, und eine in Draufsicht zwischen den Enden der Einschnittmittellinie M_{ME} gerade verlaufende Einschnittbasislinie B_{ME} (Fig. 2a, Fig. 3a: Gezeigt für Mikroeinschnitt 9, 9₂) auf. Die bereits erwähnte, bezüglich zur Umfangsrichtung vorliegende gegensinnige Neigung der Mikroeinschnitte 9, 9₁, 9₂, 9₃ zu den Einschnitten 7 bezieht sich auf die Einschnittbasislinien B_{ME} (Mikroeinschnitte 9, 9₁, 9₂, 9₃, 9₄) und die Einschnittbasislinien B_{E} (Einschnitte 7).

Die Mikroeinschnitte 9, 9₁, 9₂, 9₃ verlaufen ferner - in Draufsicht betrachtet und jeweils bezogen auf die Einschnittbasislinie B_{ME} - zur Umfangsrichtung unter einem Winkel γ (Fig. 2a: Mikroeinschnitte 9, 9₁ im schulterseitigen Profilblock 4, gezeigt für Mikroeinschnitt 9) bzw. δ (Fig. 3a: Mikroeinschnitte 9₂, 9₃ im halbmittigen Profilblock 5, gezeigt für Mikroeinschnitt 9₂ ), wobei der Winkel δ 50° bis 70°, insbesondere 55° bis 65°, bevorzugt 57° bis 63°, beträgt und um zumindest 15°, insbesondere um zumindest 20°, bevorzugt um zumindest 25°, besonders bevorzugt um 27° bis 33°, größer ist als der Winkel γ. Besonders bevorzugt sind der Winkel δ und der Winkel γ zusätzlich derart aufeinander abgestimmt, dass der Winkel γ 20° bis 40°, insbesondere 25° bis 35°, bevorzugt 27° bis 33° beträgt.

Wie Fig. 2 in Kombination mit Fig. 2a zeigt, gehören zu den Mikroeinschnitten in jedem schulterseitigen Profilblock 4 vier Mikroeinschnitte 9, welche durchgehend gebogen verlaufen, sämtliche in diesem Profilblock 4 befindlichen Einschnitte 7 kreuzen und in den randseitigen Blocksegmenten 4e, 4f in einem in Draufsicht in gerader Verlängerung der Einschnittbasislinie B_{ME} ermittelten Abstand a_{ME} (Fig. 2a) von 0,50 mm bis 2,50 mm, insbesondere von 1,00 mm bis 2,00 mm, vor der einlaufenden Blockkante 4a bzw. vor der auslaufenden Blockkante 4b enden. Gemäß Fig. 2 gehört zu den Mikroeinschnitten in jedem schulterseitigen Profilblock 4 ferner ein am weitesten laufstreifenaußenseitig verlaufender Mikroeinschnitt 9₁, welcher kaum merkbar durchgehend gebogen verläuft, ausschließlich den zur auslaufenden Blockkante 4b nächstliegenden Einschnitt 7 kreuzt und - übereinstimmend zu den Mikroeinschnitten 9 - in einem in Draufsicht in gerader Verlängerung der Einschnittbasislinie B_{ME} ermittelten Abstand a_{ME} von 0,50 mm bis 2,50 mm vor der auslaufenden Blockkante 4b endet. Die Biegung der Mikroeinschnitte 9, 9₁ ist derart, dass sich die Einschnittbasislinie B_{ME} laufstreifeninnenseitig von der zugehörigen Einschnittmittellinie M_{ME} befindet.

Wie Fig. 3 in Kombination mit Fig. 3a zeigt, gehören zu den Mikroeinschnitten in jedem halbmittigen Profilblock 5 zumindest zwei (siehe Fig. 1), bei dem in Fig. 3 gezeigten halbmittigen Profilblock 5 drei, Mikroeinschnitte 9₂, welche sämtliche in diesem Profilblock 5 befindlichen Einschnitte 7 kreuzen und über die Blockkanten 5a, 5b in die Schrägrillen 1, beim Ausführungsbeispiel in die laufstreifeninnenseitigen Rillenabschnitte 1a, einmünden. Ferner gehören zu den Mikroeinschnitten in jedem halbmittigen Profilblock 5 zwei randseitige Mikroeinschnitte 9₃, welche zumindest einen, insbesondere genau einen, Einschnitt 7 kreuzen, einseitig innerhalb des entsprechenden mittleren Blocksegments 5d geschlossen enden und über die einlaufend Blockkante 5a bzw. die auslaufende Blockkante 5b in eine Schrägrille 1, genauer den entsprechenden, laufstreifeninnseitigen Rillenabschnitt 1a, einmünden. Wie Fig. 1 zeigt, können in den halbmittigen Profilblöcken 5 Mikroeinschnitte 9₅ vorgesehen sein, welche sich zwischen einem randseitigen Mikroeinschnitt 9₃ und einem Mikroeinschnitt 9₂ befinden, in eine einzige Schrägrille 1 einmünden und mit ihrem anderen Ende innerhalb eines mittleren oder randseitigen Blocksegments 4d, 4e, 4f geschlossen enden.

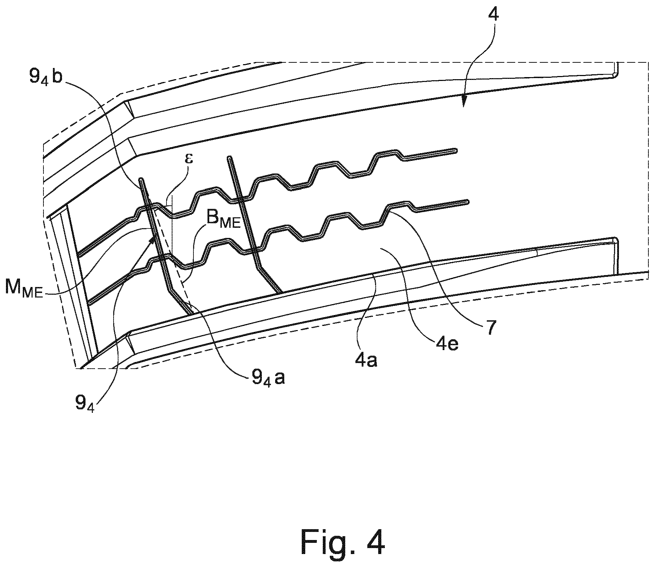

Fig. 4 zeigt eine Draufsicht auf einen schulterseitigen Profilblock 4 mit Mikroeinschnitten 9₄, welche eine Alternative zu den Mikroeinschnitten 9 (Fig. 2) sind. Die Mikroeinschnitte 9₄ setzen sich, in Draufsicht betrachtet, aus einem gerade verlaufenden, kurzen Mikroeinschnittabschnitt 9₄a und einem gegenüber diesem länger ausgeführten, langen Mikroeinschnittabschnitt 9₄b zusammen und verläuft - bezogen auf die Einschnittbasislinie B_{ME} zur Umfangsrichtung unter einem Winkel ε. Der Winkel δ (Fig. 3a), unter welchem die Mikroeinschnitte 9₂, 9₃ im halbmittigen Profilblock 5 verlaufen, ist um zumindest 15°, insbesondere um zumindest 20°, bevorzugt um zumindest 25°, besonders bevorzugt um 27° bis 33°, größer ist als der Winkel ε. Besonders bevorzugt sind der Winkel δ und der Winkel ε zusätzlich derart aufeinander abgestimmt, dass der Winkel ε 15° bis 25° beträgt. Der kurze Mikroeinschnittabschnitt 9₄a verläuft zur einlaufenden Blockkante 4a, endet innerhalb des einlaufenden randseitigen Blocksegments 4e in einem in Umfangsrichtung ermittelten Abstand vor dem entsprechenden Einschnitt 7 und ist zur Umfangsrichtung stärker geneigt als der lange Mikroeinschnittabschnitt 9₄b. Die Mikroeinschnittabschnitte 9₄a, 9₄b sind ferner derart geneigt, dass sich die Einschnittbasislinie B_{ME} laufstreifenaußenseitig von der zugehörigen Einschnittmittellinie M_{ME} befindet.

Die Erfindung ist auf die beschriebenen Ausführungsbeispiele nicht beschränkt. Insbesondere können die Schrägrillen 1, 2 in Draufsicht durchgehend gebogen, durchgehend gerade oder abschnittsweise gerade und/oder gebogen verlaufen. Ferner können die verschieden ausgeführten Mikroeinschnitte (gerade verlaufende Mikroeinschnitte, gebogen verlaufende Mikroeinschnitte, Mikroeinschnitte mit zwei Mikroeinschnittabschnitten) in den einzelnen Profilblöcken in Kombination vorgesehen sein.

### Bezugszeichenliste

- 1: Schrägrille
- 1a: laufstreifeninnenseitiger Rillenabschnitt
- 1b: schulterseitiger Rillenabschnitt
- 2: Schrägrille
- 2a: laufstreifeninnenseitiger Rillenabschnitt
- 2b: schulterseitiger Rillenabschnitt
- 3a: Rille
- 3b: Rille
- 4: schulterseitiger Profilblock
- 4a: einlaufende Blockkante
- 4b: auslaufende Blockkante
- 4c: Blockaußenfläche
- 4d: mittleres Blocksegment
- 4e: einlaufendes, randseitiges Blocksegment
- 4f: auslaufendes, randseitiges Blocksegment
- 5: halbmittiger Profilblock
- 5a: einlaufende Blockkante
- 5b: auslaufende Blockkante
- 5c: Blockaußenfläche
- 5d: mittleres Blocksegment
- 5e: einlaufendes, randseitiges Blocksegment
- 5f: auslaufendes, randseitiges Blocksegment
- 6: mittiger Profilblock
- 7: Einschnitt
- 7a: Einschnittabschnitt
- 7a₁: Teilabschnitt
- 7a₂: Teilabschnitt
- 7b: Einschnittabschnitt
- 8: Einschnittkante
- 9, 9₁, 9₂, 9₃, 9₄, 9₅: Mikroeinschnitt
- 9₄a: kurzer Mikroeinschnittabschnitt
- 9₄b: langer Mikroeinschnittabschnitt
- A-A: Linie (Reifenäquatorialebene)
- a₁, a_{ME}: Abstand
- b_{E}, b_{ME}, b_{SR}, b_{R}: Breite
- B_{E}, B_{ME}: Einschnittbasislinie
- b₄, b₅: maximale Blockbreite
- h₁, h₂: Hilfslinie
- K: Knickstelle
- L: Linie (seitlicher Rand der Bodenaufstandsfläche)
- M_{E}, M_{ME}: Einschnittmittellinie
- m_{R}, M_{SR1}, m_{SR2}: Rillenmittellinie
- R: Pfeil (Abrollrichtung)
- Z₂ₐ, Z₃ₐ: Detail
- α₁, α₂, β, γ, δ, ε: Winkel

## Patentansprüche

1. Fahrzeugreifen mit einem laufrichtungsgebunden ausgeführten Laufstreifen mit über seine Breite V-förmig zueinander verlaufenden, auf Profiltiefe reichenden Schrägrillen (1, 2), wobei in jeder Laufstreifenhälfte zwischen in Umfangsrichtung aufeinanderfolgenden Schrägrillen (1, 2) jeweils weitere Rillen (3a, 3b) verlaufen, wobei die Schrägrillen (1, 2) und die weiteren Rillen (3a, 3b) dem Laufstreifen in jeder Laufstreifenhälfte schulterseitige Profilblöcke (4) und zu diesen benachbarte, halbmittige Profilblöcke (5) verleihen,
wobei die schulterseitigen und halbmittigen Profilblöcke (4, 5) an den Schrägrillen (1, 2) je eine einlaufende und eine auslaufende Blockkante (4a, 4b, 5a, 5b) aufweisen und jeweils von zumindest einem oder mehreren in Draufsicht parallel zueinander verlaufenden Einschnitt(en) (7) mit einer Breite (b_{E}) von 0,40 mm bis 2,00 mm sowie einer maximalen Tiefe von 50% bis 100% der Profiltiefe durchquert sind, wobei die Einschnitte (7) in den schulterseitigen Profilblöcken (4) bezüglich der Umfangsrichtung gleichsinnig geneigt zu den Blockkanten (4a, 4b) verlaufen, wobei die schulterseitigen Profilblöcke (4) jeweils mit in Draufsicht parallel zueinander, bezüglich der Umfangsrichtung gegensinnig zu dem bzw. zu den Einschnitt(en) (7) geneigt sowie unter einem Winkel (γ, ε) verlaufenden, je zumindest einen Einschnitt (7) kreuzenden Mikroeinschnitten (9, 9₁, 9₄) und die halbmittigen Profilblöcke (5) jeweils mit in Draufsicht parallel zueinander, bezüglich der Umfangsrichtung unter einem Winkel (δ) verlaufenden Mikroeinschnitten (9₂, 9₃, 9₅) versehen sind,
wobei die Mikroeinschnitte (9, 9₁, 9₂, 9₃, 9₄, 9₅) eine Breite (b_{ME}) und eine Tiefe von 0,40 mm bis 2,00 mm aufweisen,
**dadurch gekennzeichnet,**
**dass** die Einschnitte (7) in den halbmittigen Profilblöcken (5) bezüglich der Umfangsrichtung gleichsinnig geneigt zu den Blockkanten (5a, 5b) verlaufen, wobei sämtliche Einschnitte (7) in den schulterseitigen und halbmittigen Profilblöcken (4, 5) in die an den zugehörigen Profilblock (4, 5) angrenzende(n) weitere(n) Rille(n) (3a, 3b) einmünden,
wobei die Mikroeinschnitte (9₂, 9₃, 9₅) in den halbmittigen Profilblöcken (5) bezüglich der Umfangsrichtung gegensinnig zum bzw. zu den Einschnitt(en) (7) geneigt verlaufen, je zumindest einen Einschnitt (7) kreuzen und wobei der Winkel (δ), unter welchem die Mikroeinschnitte (9₂, 9₃, 9₅) in den halbmittigen Profilblöcken (5) verlaufen, größer ist als der Winkel (γ, ε), unter welchem die Mikroeinschnitte (9, 9₁, 9₄) in den schulterseitigen Profilblöcken (4) verlaufen.

2. Fahrzeugreifen nach Anspruch 1, **dadurch gekennzeichnet, dass** der Winkel (δ), unter welchem die Mikroeinschnitte (9₂, 9₃, 9₅) in den halbmittigen Profilblöcken (5) verlaufen, um zumindest 15°, insbesondere um zumindest 20°, bevorzugt um zumindest 25°, besonders bevorzugt um 27° bis 33°, größer ist als der Winkel (γ, ε), unter welchem die Mikroeinschnitte (9, 9₁, 9₄) in den schulterseitigen Profilblöcken (4) verlaufen.

3. Fahrzeugreifen nach Anspruch 1 oder 2, **dadurch gekennzeichnet, dass** der Winkel (δ), unter welchem die Mikroeinschnitte (9₂, 9₃, 9₅) in den halbmittigen Profilblöcke (5) verlaufen, 50° bis 70°, insbesondere 55° bis 65°, bevorzugt 57° bis 63°, beträgt.

4. Fahrzeugreifen nach einem der Ansprüche 1 bis 3, **dadurch gekennzeichnet, dass** zu den Mikroeinschnitten (9, 9₁, 9₄) in den schulterseitigen Profilblöcken (4) jeweils Mikroeinschnitte (9, 9₄) einer ersten Art gehören, welche jeweils den bzw. sämtliche im schulterseitigen Profilblock (4) befindlichen Einschnitt(e) (7) kreuzen, eine ihrem Verlauf folgende Einschnittmittellinie (M_{ME}) und eine zwischen den Enden der Einschnittmittellinie (M_{ME}) gerade verlaufende Einschnittbasislinie (B_{ME}) aufweisen und welche in einem in geradliniger Verlängerung der Einschnittbasislinie (B_{ME}) ermittelten Abstand (a_{ME}) von insbesondere 0,50 mm bis 2,50 mm, vorzugsweise von 1,00 mm bis 2,00 mm, vor der auslaufenden Blockkante (4b) enden.

5. Fahrzeugreifen nach Anspruch 4, **dadurch gekennzeichnet, dass** zu den Mikroeinschnitten (9, 9₄) erster Art in den schulterseitigen Profilblöcken (4) jeweils Mikroeinschnitte (9) gehören, welche in einem in geradliniger Verlängerung der Einschnittbasislinie (B_{ME}) ermittelten Abstand (a_{ME}) von insbesondere 0,50 mm bis 2,50 mm, vorzugsweise von 1,00 mm bis 2,00 mm, vor der einlaufenden Blockkante (4a) enden, wobei diese Mikroeinschnitte (9) erster Art vorzugsweise die einzigen Mikroeinschnitte (9) ersten Art sind.

6. Fahrzeugreifen nach Anspruch 4 oder 5, **dadurch gekennzeichnet, dass** zu den Mikroeinschnitten (9, 9₄) erster Art in den schulterseitigen Profilblöcken (4) jeweils Mikroeinschnitte (9) gehören, welche, in Draufsicht betrachtet, durchgehend gebogen oder gerade verlaufen, wobei der Winkel (γ), unter welchem die durchgehend gebogen oder gerade verlaufenden Mikroeinschnitte (9) zur Umfangsrichtung verlaufen, insbesondere 20° bis 40°, bevorzugt 25° bis 35°, besonders bevorzugt 27° bis 33°, beträgt.

7. Fahrzeugreifen nach Anspruch 6, **dadurch gekennzeichnet, dass** bei durchgehend gebogen verlaufenden Mikroeinschnitten (9) die Biegung derart ist, dass sich die Einschnittbasislinie (B_{ME}) laufstreifeninnenseitig von der Einschnittmittellinie (M_{ME}) befindet.

8. Fahrzeugreifen nach einem der Ansprüche 4 bis 7, **dadurch gekennzeichnet, dass** zu den Mikroeinschnitten (9, 9₄) erster Art in den schulterseitigen Profilblöcken (4) jeweils Mikroeinschnitte (9₄) gehören, welche, in Draufsicht betrachtet, aus einem gerade sowie zur einlaufenden Blockkante (4a) verlaufenden, kurzen Mikroeinschnittabschnitt (9₄a) und einem gegenüber diesem länger ausgeführten sowie zur Umfangsrichtung weniger stark geneigten, gerade verlaufenden, langen Mikroeinschnittabschnitt (9₄b) zusammengesetzt sind, wobei der kurze Mikroeinschnittabschnitt (9₄a) in einem in Umfangsrichtung ermittelten Abstand vor dem zur einlaufenden Blockkante (4a) nächstliegenden Einschnitt (7) endet und wobei der Winkel (ε), unter welchem die Mikroeinschnitte (9₄) aus den Mikroeinschnittabschnitten (9₄a, 9₄b) zur Umfangsrichtung verlaufen, insbesondere 15° bis 25° beträgt.

9. Fahrzeugreifen nach Anspruch 8, **dadurch gekennzeichnet, dass** die Mikroeinschnittabschnitte (9₄a, 9₄b) derart geneigt sind, dass sich die Einschnittbasislinie (B_{ME}) laufstreifenaußenseitig von der zugehörigen Einschnittmittellinie (M_{ME}) befindet.

10. Fahrzeugreifen nach einem der Ansprüche 4 bis 9, **dadurch gekennzeichnet, dass** zu den Mikroeinschnitten (9, 9₁, 9₄) in den schulterseitigen Profilblöcken (4) jeweils ein einziger Mikroeinschnitt (9₁) einer zweiten Art gehört, welcher von sämtlichen Mikroeinschnitten (9, 9₁, 9₄) innerhalb des jeweiligen schulterseitigen Profilblocks (4) am weitesten laufstreifenaußenseitig ausgebildet ist und ausschließlich den zur auslaufenden Blockkante (4b) nächstliegenden Einschnitt (8) kreuzt, eine zwischen den Enden der Einschnittmittellinie (M_{ME}) gerade verlaufende Einschnittbasislinie (B_{ME}) aufweist und welcher in einem in geradliniger Verlängerung der Einschnittbasislinie (B_{ME}) ermittelten Abstand (a_{ME}) von insbesondere 0,50 mm bis 2,50 mm, vorzugsweise von 1,00 mm bis 2,00 mm, vor der auslaufenden Blockkante (4b) endet.

11. Fahrzeugreifen nach einem der Ansprüche 1 bis 10, **dadurch gekennzeichnet, dass** zu den Mikroeinschnitten (9₂, 9₃) in den halbmittigen Profilblöcken (5) jeweils Mikroeinschnitte (9₂) einer ersten Ausgestaltung gehören, welche jeweils den bzw. sämtliche im halbmittigen Profilblock (5) befindlichen Einschnitt(e) (7) kreuzen und über die Blockkanten (5a, 5b) in die angrenzenden Schrägrillen (1) einmünden.

12. Fahrzeugreifen nach Anspruch 11, **dadurch gekennzeichnet, dass** zu den Mikroeinschnitten (9₂, 9₃) in den halbmittigen Profilblöcken (5) jeweils zwei Mikroeinschnitte (9₃) einer zweiten Ausgestaltung gehören, wobei die Mikroeinschnitte (9₂) der ersten Ausgestaltung im Bereich zwischen den zwei Mikroeinschnitten (9₃) der zweiten Ausgestaltung verlaufen und wobei die Mikroeinschnitte (9₃) der zweiten Ausgestaltung randseitige Mikroeinschnitte (9₃) sind und jeweils zumindest einen, insbesondere genau einen, Einschnitt (7) kreuzen, einseitig innerhalb des halbmittigen Profilblocks (5) geschlossen enden und in eine der angrenzenden Schrägrillen (1) einmünden.

13. Fahrzeugreifen nach einem der Ansprüche 1 bis 12, **dadurch gekennzeichnet, dass**, bezogen auf die Draufsicht, sich die Einschnitte (7) jeweils aus einem trapezwellenförmig verlaufenden, mittigen Einschnittabschnitt (7a) sowie zwei gerade oder kaum merkbar gebogen verlaufenden, randseitigen Einschnittabschnitten (7b) zusammensetzen, wobei der mittige Einschnittabschnitt (7a) in Form von aneinander anschließenden, basisfreien, vorzugsweise gleichschenkeligen, Trapezen verläuft und aus gerade verlaufenden, gemeinsame Trapezschenkel bildenden Teilabschnitten (7a₁) und je eine kürzere Grundseite eines Trapezes bildenden Teilabschnitten (7a₂) zusammengesetzt ist.
